Europäisches Patentamt

European Patent Office

Office européen des brevets

(19)

(11) **EP 0 771 135 B1**

(12) **FASCICULE DE BREVET EUROPEEN**

(45) Date de publication et mention
de la délivrance du brevet:
**26.01.2005 Bulletin 2005/04**

(51) Int Cl.⁷: **H05B 6/12**, H05B 6/36

(21) Numéro de dépôt: **96402194.3**

(22) Date de dépôt: **15.10.1996**

(54) **Bobinage inducteur multibrin à toronnage de type Litz pour foyer de cuisson par induction**

Aus Litzenleitern induktive Wicklung eines Induktionskochgerätes

Inductive Litz wire winding used in an induction cooking apparatus

(84) Etats contractants désignés:
**DE FR NL**

(30) Priorité: **27.10.1995 FR 9512716**

(43) Date de publication de la demande:
**02.05.1997 Bulletin 1997/18**

(73) Titulaire: **Brandt Industries**
**92500 Rueil Malmaison (FR)**

(72) Inventeurs:
• **Gaspard, Jean-Yves, Thomson-CSF, SCPI**
**92402 Courbevoie Cedex (FR)**
• **Burais, Noel, Thomson-CSF, SCPI**
**92402 Courbevoie Cedex (FR)**

(74) Mandataire: **Santarelli**
**14, avenue de la Grande Armée**
**75017 Paris (FR)**

(56) Documents cités:
**FR-A- 2 417 913**        **US-A- 4 296 295**

• **PATENT ABSTRACTS OF JAPAN vol. 00, no.
0000 & JP 06 333669 A (HIGUCHI YOSHINORI), 2
Décembre 1994,**

## Description

La présente invention conceme les appareils de cuisson par induction.

La cuisson par induction consiste à placer la substance à cuire dans un récipient ferromagnétique chauffé par une circulation de courant dans ses parois provoquée par un champ électromagnétique haute fréquence de l'ordre de 20 à 50 kHz. Le champ électromagnétique haute fréquence est engendré par un bobinage inducteur qui est disposé sous le récipient et qui est excité par un courant électrique alternatif haute fréquence fourni par un onduleur.

Le bobinage inducteur est habituellement constitué d'une bobine plate réalisée en enroulant, jointivement en spirale, un toron de fils conducteurs multibrins isolés individuellement par une couche isolante.

Sans un toronnage de type Litz (permutation périodique des brins dans le toron), l'effet de proximité fait que le courant haute fréquence tend à migrer à la périphérie du toron, les conducteurs externes formant un écran autour des conducteurs internes dans lesquels il ne passe presque plus de courant. Il en résulte une mauvaise utilisation des brins centraux du toron et par conséquent un taux de pertes relativement important obligeant à surdimensionner le toron.

Dans la technique actuelle, des brins conducteurs sont isolés individuellement par un vernis pour éviter une possibilité de passage du courant haute fréquence entre brins. Le vernis isolant individuellement les fils du toron assure également l'isolation électrique entre spires jointives du bobinage inducteur. Cependant, il a l'inconvénient d'augmenter d'une manière non négligeable le coût de fabrication du bobinage, cela, d'autant plus qu'il doit résister à des températures de l'ordre de 200° en continu, qui peuvent être atteintes par le bobinage soit en raison de son échauffement propre, soit en raison d'un échauffement provoqué par la proximité du récipient de cuisson.

Pour faciliter le maintien et le refroidissement du bobinage inducteur, il est aussi connu, notamment par la demande de brevet français enregistrée sous le n° 94 13653, de disposer le bobinage inducteur dans un logement en creux, en forme de spirale, creusé sur la face supérieure d'un support électriquement isolant et thermiquement conducteur. Dans ce cas, les spires successives du bobinage inducteur ne sont plus jointives et sont séparées entre elles par les parois du logement. Le vernis isolant des brins du toron n'assure alors plus d'isolation électrique entre spires mais uniquement l'isolation électrique entre brins voisins au niveau de chaque spire.

Le document FR 2 417 913 décrit également un bobinage inducteur ayant des spires séparées entre elles par les parois d'un logement réalisé sur un support du bobinage inducteur.

La présente invention a pour but de diminuer le coût de fabrication d'un bobinage inducteur multibrin à toronnage de type Litz pour foyer de cuisson par induction en profitant de l'isolation électrique entre spires apporté par l'utilisation d'un support de bobinage électriquement isolant pourvu sur sa face supérieure d'une empreinte en creux, en forme de spirale, servant de logement pour le bobinage et présentant une cloison de séparation entre chaque spire du bobinage.

Elle a pour objet un bobinage inducteur multibrin à toronnage de type Litz pour foyer de cuisson par induction destiné à avoir ses spires placées individuellement dans un logement en creux en forme de spirale qui est porté par la face supérieure d'un support de bobinage électriquement isolant et qui présente une cloison de séparation entre chaque spire du bobinage. Ce bobinage inducteur multibrin à toronnage de type Litz est remarquable en ce que ses brins toronnés sont réalisés en en matériau conducteur nu.

Avantageusement, le bobinage inducteur multibrin à toronnage de type Litz a des brins réalisés en fil de cuivre nu. Il possède alors un niveau de pertes haute fréquence d'environ 15% supérieur à ce qu'il aurait si ses brins étaient revêtus d'un vernis isolant ce qui reste très raisonnable.

Avantageusement, le bobinage inducteur multibrin à toronnage de type Litz à des brins en fil d'aluminium nu. L'aluminium nu se recouvre immédiatement au contact de l'air d'une couche d'oxyde électriquement isolante qui permet de limiter les contacts électriques entre brins de sorte que le niveau de pertes haute fréquence est très voisin de celui d'un bobinage multibrin à toronnage de type Litz, a brins revêtus d'un vernis isolant.

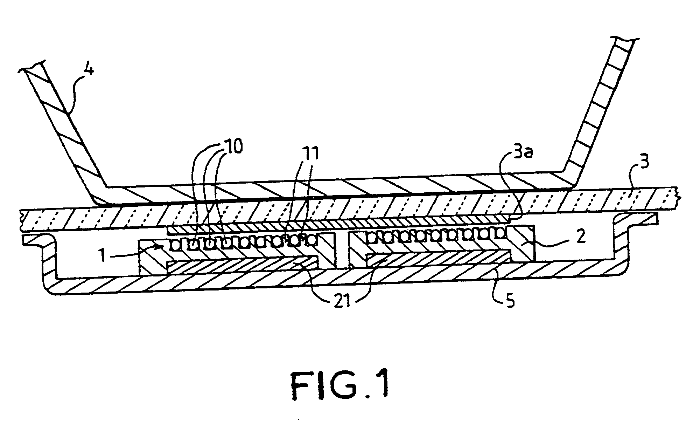

D'autres caractéristiques et avantages de l'invention ressortiront de la description ci-après d'un mode de réalisation donné à titre d'exemple.
Cette description sera faite en regard du dessin dont la figure unique représente schématiquement, en coupe selon un plan vertical, la structure possible d'un foyer de cuisson par induction équipé d'un bobinage inducteur multibrin selon l'invention.

Le foyer de cuisson par induction représenté dans la figure comporte un bobinage inducteur 1 formé par un toron multibrin de fils conducteurs électriques enroulé en forme de spirale dont les différentes spires sont indexées par 10.

Ce bobinage inducteur 1 est placé dans une empreinte en creux en forme de spirale, creusée dans la face supérieure d'un support de bobinage 2 électriquement isolant. Comme on peut le voir sur la figure, chaque spire 10 du bobinage inducteur vient se placer dans l'empreinte et est isolée électriquement de sa voisine par la paroi 11 de l'empreinte qui réalise un cloisonnement. L'empreinte a une section transversale légèrement inférieure à celle du toron multibrin du bobinage inducteur de manière à permettre la fixation de ce dernier par coincement, en jouant sur la déformation de sa section transversale qui s'ovalise. Cela évite d'avoir à coller les spires du bobinage inducteur au moyen d'une résine thermoadhérente.

Le bobinage inducteur 1 porté par son support 2 est placé sous une plaque 3, par exemple en vitrocéramique, destinée à recevoir le récipient à chauffer 4. Il est de préférence séparé de la plaque 3 par une couche 3a d'isolant thermique (papier céramique ou laine de verre) de façon à le protéger des échauffements par les récipients.

Le support 2 du bobinage inducteur 1 comporte de manière connue, un matériau magnétique 21 disposé par exemple par en dessous, dont le rôle est de focaliser le champ magnétique engendré par le bobinage inducteur vers le récipient à chauffer.

L'ensemble du bobinage inducteur 1 et de son support 2 est placé sur un plateau 5 en matériau amagnétique, par exemple en aluminium, à rebords enveloppant, dont le rôle est de minimiser les champs magnétiques parasites du bobinage inducteur 1, en vue notamment, de protéger le générateur de courant haute fréquence placé en dessous qui alimente le bobinage inducteur.

En haute fréquence (20-50 kHz), les courants ont tendance à circuler à la périphérie des conducteurs. On appelle ce phénomène l'effet pelliculaire. Avec un conducteur à section ronde, 87 % de la puissance est dissipée dans l'épaisseur de peau p qui est donnée par la formule :

$$p = \sqrt{\frac{1}{\mu_0 \cdot \mu_r \cdot \sigma \cdot \pi \cdot f}}$$

où : $\mu_0 = 4.\pi.10^{-7}$ , $\mu_r = 1$ , $\sigma = 58$ S.m/mm$^2$ et f est la fréquence du courant.

A titre d'exemple, pour du cuivre de section ronde à 25 kHz, il ne sert à rien de dépasser un diamètre de 0,4 mm car, au-delà, le cuivre est très peu utilisé pour le passage des courants. Un seul conducteur rond de 0,4 mm est cependant nettement insuffisant pour le passage des courants d'excitation d'une plaque à induction de forte puissance (3 kW). On peut alors jouer sur la forme de la section du conducteur (méplat) ou mettre en oeuvre plusieurs conducteurs en parallèle. Dans ce dernier cas, on est confronté à un second effet dit effet de proximité. La répartition des courants dans un conducteur est en effet perturbée par le passage des courants dans un conducteur voisin. Dans le cas de plusieurs conducteurs réunis en faisceau, les conducteurs externes forment un écran autour des conducteurs internes dans lesquels il ne passe presque plus de courant. Pour lutter contre ce phénomène, il est nécessaire d'adopter un toronnage spécial connu sous le nom de toronnage de Litz. En effet, avec un toronnage classique, il existe un brin central sur lequel on vient placer des couches concentriques de conducteurs et l'effet écran est très prononcé. Au contraire, avec un toronnage de type Litz, chaque brin élémentaire vient se placer périodiquement au centre du toron et à sa périphérie.

En outre, le fait d'optimiser la répartition des courants donne aux brins une impédance (L, R) sensiblement équivalente de sorte qu'ils sont à peu près équipotentiels au sein du toron.

Le bobinage inducteur 1 est donc formé d'un toron multibrin de fils conducteurs assemblés à la manière des fils de Litz de manière que chaque brin élémentaire conducteur occupe successivement toutes les positions dans le toron (au centre et à la périphérie... ).

Comme l'isolation électrique entre spires du bobinage inducteur est déjà assurée par le cloisonnement 11 du logement de chacune d'elles dans le support 2 de bobinage, il ne subsiste entre brins que des différences de potentiel résiduelles au niveau d'une spire qui sont de l'ordre de quelques volts avec un toronnage de type Litz. Ces faibles différences de potentiel peuvent s'accommoder des résistances naturelles de contact entre fils de cuivre nus à section ronde car les contacts entre brins sont très ponctuels et donc résistifs, surtout si le pas de toronnage de type Litz est court, par exemple de l'ordre de 35 mm pour un toron de 20 brins conducteurs de 0,4 mm de diamètre.

Aussi, on propose de réaliser le toron multibrin du bobinage inducteur à l'aide de brins élémentaires en fils de cuivre nus sans vernis de protection électriquement isolant assemblés en faisceau selon un toronnage de type Litz. On obtient ainsi une réduction très importante du coût de fabrication du bobinage inducteur au prix d'une augmentation du niveau des pertes haute fréquence d'environ 15 % ce qui reste très raisonnable.

Il ne serait pas possible d'utiliser des brins élémentaires en fils de cuivre nu sans un toronnage de type Litz car alors, les impédances des différents brins en parallèle les uns les autres sont fortement différentes, avec, pour conséquence, des différences de potentiel entre brins bien supérieures et un niveau de pertes haute fréquence beaucoup plus élevé dans le cas de brins électriquement en contact.

On peut aussi utiliser des brins élémentaires en fils d'aluminium nus sans vernis de protection électriquement isolant. L'aluminium présente sur le cuivre l'avantage de se recouvrir immédiatement au contact de l'air d'une couche d'oxyde électriquement isolante conduisant à une résistance de contact élevée entre brins. Le niveau des pertes hautes fréquence se rapproche alors de celui d'un bobinage inducteur multibrin à toronnage de Litz, avec des brins de cuivre isolés par un vernis. L'avantage de l'utilisation d'aluminium au lieu de cuivre découle également de son moindre coût.

La suppression du vernis électriquement isolant assure, en plus d'une diminution du coût du bobinage inducteur un meilleur contact thermique entre brins et avec le support de bobinage ce qui facilite le refroidissement du bobinage.

**Revendications**

1.  Bobinage inducteur multibrin (1) à toronnage de type Litz pour foyer de cuisson par induction destiné à avoir ses spires (10) placées individuellement dans un logement en creux en forme de spirale qui est porté par la face supérieure d'un support (2) de bobinage électriquement isolant et qui présente une cloison de séparation (11) entre chaque spire (10), **caractérisé en ce que** ledit bobinage inducteur multibrin est constitué de brins toronnés réalisés en un matériau conducteur nu.

2.  Bobinage selon la revendication 1, **caractérisé en ce que** ses brins sont réalisés en fils de cuivre nus sans vernis de protection électriquement isolant.

3.  Bobinage selon la revendication 1, **caractérisé en ce que** ses brins sont réalisés en fils d'aluminium nus sans vernis dé protection électriquement isolant.

4.  Bobinage selon la revendication 1, **caractérisé en ce que** le pas de son toronnage de type Litz est de l'ordre de 35 mm.

5.  Bobinage selon la revendication 4, **caractérisé en ce que** les brins conducteurs de son toron ont un diamètre de l'ordre de 0,4 mm.

6.  Bobinage selon la revendication 5, **caractérisé en ce qu'**il est formé d'un toron d'une vingtaine de brins conducteurs.

**Claims**

1.  Multi-filament inductive winding (1) with Litz stranding for an induction hob intended to have its turns (10) placed individually in a hollow housing in the form of a spiral which is carried by the upper face of an electrically insulating winding support (2) and which has a separating partition (11) between each turn (10), **characterised in that** said multifilament inductive winding consists of stranded filaments made from a bare conductive material.

2.  Winding according to Claim 1, **characterised in that** its filaments are made from bare copper wires with no electrically insulating protective varnish.

3.  Winding according to Claim 1, **characterised in that** its filaments are made from bare aluminium wires with no electrically insulating protective varnish.

4.  Winding according to Claim 1, **characterised in that** the pitch of its Litz stranding is approximately 35 mm.

5.  Winding according to Claim 4, **characterised in that** the conductive filaments of its strand have a diameter of approximately 0.4 mm.

6.  Winding according to Claim 5, **characterised in that** it is formed from a strand of about twenty conductive filaments.

**Patentansprüche**

1.  Induzierende, mehrdrahtige Wicklung (1) mit einer Litzenverseilung für eine Induktionskochstelle, wobei die Windungen (10) der Wicklung dazu bestimmt sind, einzeln in eine vertiefte, spiralförmige Aufnahme eingesetzt zu sein, welche von der oberen Fläche eines elektrisch isolierenden Wicklungsträgers (2) getragen ist und zwischen jeder Windung (10) eine Trennwand (11) aufweist, **dadurch gekennzeichnet, dass** die induzierende, mehrdrahtige Wicklung aus verseilten Drähten besteht, die aus leitendem, blankem Material hergestellt sind.

2.  Wicklung nach Anspruch 1, **dadurch gekennzeichnet, dass** ihre Drähte aus blanken Kupferfäden ohne elektrisch isolierenden Schutzlack realisiert sind.

3.  Wicklung nach Anspruch 1, **dadurch gekennzeichnet, dass** ihre Drähte aus blanken Aluminiumfäden ohne elektrisch isolierenden Schutzlack realisiert sind.

4.  Wicklung nach Anspruch 1, **dadurch gekennzeichnet, dass** der Schritt ihrer Litzenverseilung bei 35 mm liegt.

5.  Wicklung nach Anspruch 4, **dadurch gekennzeichnet, dass** die leitenden Drähte ihrer Litze einen Durchmesser von 0,4 mm haben.

6.  Wicklung nach Anspruch 5, **dadurch gekennzeichnet, dass** sie durch eine Litze mit etwa zwanzig leitenden Drähten ausgebildet ist.

FIG.1